# EUROPEAN PATENT APPLICATION

(11) **EP 4 671 561 A1**
(43) Date of publication of application: **31.12.2025**
(21) Application number: 23930451.2
(22) Date of filing: 29.03.2023
(51) Int. Cl.: F16D 48/02

(54) **CLUTCH CONTROL DEVICE**

(71) Applicant: HONDA MOTOR CO., LTD., Tokyo 105-8404 (JP)
(72) Inventor: TSUZUKI Ryohei, Tokyo 107-8556 (JP); ONO Junya, Tokyo 107-8556 (JP); RYUZAKI Tatsuya, Tokyo 107-8556 (JP)
(74) Representative: Kiwit, Benedikt
(86) International application number: PCT/JP2023/012896
(87) International publication number: WO 2024/201813

(57) **Abstract**

A clutch control device (40A) includes a clutch device (26), a clutch actuator (50) and a control unit (40), wherein the control unit (40) performs automatic clutch disconnection control which disconnects the clutch device (26) during a gear shift is performed and a vehicle speed is reduced, and sets a clutch disconnection speed (L12VB) of the automatic clutch disconnection control during the vehicle speed is reduced to a speed lower than a clutch disconnection speed (L12VA) of the automatic clutch disconnection control during the gear shift is performed.

## Description

### TECHNICAL FIELD

The present invention relates to a clutch control device.

### BACKGROUND ART

Conventionally, a clutch control device in which the connection/disconnection operation of a clutch device is automatically performed by electric control is known (see, for example, Patent Documents 1 and 2).

For example, Patent Document 1 discloses that engine stall is avoided by automatically disconnecting the clutch when the vehicle is in a state of transition to stop.

Here, for example, as in Patent Document 2, when the clutch lever operated by the driver and the clutch actuator are mechanically connected, when the clutch is automatically disconnected by the clutch actuator, the movement of the clutch actuator is also transmitted to the clutch lever. A clutch disconnection control during the gear shift is within the driver's expectation, however, a clutch disconnection control during when the vehicle speed is reduced generates an unexpected behavior to the clutch lever, and there is a concern that an uncomfortable feeling is given to the driver.

### Citation List

### Patent Document

Patent Document 1: Japanese Unexamined Patent Application, First Publication No. H9-324827
Patent Document 2: Japanese Unexamined Patent Application, First Publication No. 2005-106246

### SUMMARY OF INVENTION

### Technical Problem

It is therefore an object of the present invention to provide a clutch control device capable of performing manual and automatic clutch operations, which can suppress a feeling of discomfort in clutch disconnection control when the vehicle speed is reduced. The present invention is directed to improving operability in order to solve the above problem. This will further improve traffic safety and contribute to the development of a sustainable transport system.

### Solution to Problem

A clutch control device (40A) is provided with a clutch device (26) that is configured to disconnect and connect power transmission between a prime mover (13) and an output object (21) of a vehicle (1), a clutch actuator (50) that is configured to operate the clutch device (26), and a control unit (40) that is configured to control a drive of the clutch actuator (50), wherein the control unit (40) performs automatic clutch disconnection control which disconnects the clutch device (26) during a gear shift is performed and a vehicle speed is reduced, and sets a clutch disconnection speed (L12VB) of the automatic clutch disconnection control during the vehicle speed is reduced to a speed lower than a clutch disconnection speed (L12VA) of the automatic clutch disconnection control during the gear shift is performed.

According to this configuration, by setting the clutch disconnection speed of the automatic clutch disconnection control during the vehicle speed is reduced to be lower than the clutch disconnection speed of the automatic clutch disconnection control during a gear shift is performed, it is possible to suppress the occurrence of an unexpected movement due to the sudden clutch disconnection control in the clutch operating element touched by the driver, and to suppress the occurrence of a sense of discomfort in the automatic clutch disconnection control during the vehicle speed is reduced.

In a second aspect of the present invention, according to the above mentioned first aspect, the automatic clutch disconnection control during the vehicle speed is reduced is performed by either one of a relaxed clutch disconnection speed that is set when the rate of reduction in the vehicle speed or the engine speed is less than a specified threshold value and an engine stall avoidance clutch disconnection speed that is set when the rate of reduction in the vehicle speed or the engine speed is equal to or greater than the threshold value, and the relaxed clutch disconnection speed is set to be lower than the engine stall avoidance clutch disconnection speed.

According to this configuration, the reduction clutch disconnection speed and the engine stall avoidance clutch disconnection speed, which are different from each other in speed, are set, and these are switched according to the rate of reduction in the vehicle speed or the engine speed, so that both the improvement of the lever feeling and the avoidance of the engine stall can be achieved.

In a third aspect of the present invention, according to the above mentioned second aspect, the control unit (40) has an automatic control mode (M1) that automatically operates the clutch device (26) by driving the clutch actuator (50), and a manual control intervention mode (M3) that manually operates the clutch device (26) by an operation input to a clutch operator (4b) operated by a driver, and, when a predetermined return condition to the automatic control mode (M1) is satisfied during control in the manual control intervention mode (M3), the control unit (40) automatically returns to the automatic control mode (M1).

According to this configuration, when a predetermined return condition to the automatic control mode is satisfied during control in the manual control intervention mode, the automatic control mode is automatically returned to the automatic control mode, whereby it is possible to suppress the driver from misidentifying the control mode and performing the shift operation (in particular, performing the in-gear operation without the clutch operation in spite of the manual control intervention mode), to avoid engine stall due to forgetting to disconnect the clutch, and to improve operability.

In a fourth aspect of the present invention, according to the above mentioned third aspect, when the vehicle speed or the engine speed is reduced to a predetermined rate change determination threshold value (W1) in the manual control intervention mode (M3) and when the rate of reduction of the vehicle speed or the engine speed is equal to or greater than a predetermined engine stall avoidance determination threshold value (W2), the automatic clutch disconnection control is performed at the engine stall avoidance clutch disconnection speed.

According to this configuration, when the vehicle speed or the engine speed is less than the rate change determination threshold value and the rate of reduction in the vehicle speed or the engine speed is equal to or greater than the engine stall avoidance determination threshold value, the engine stall due to the delay in the automatic clutch disconnection can be suppressed by performing the automatic clutch disconnection with the engine stall avoidance clutch disconnection speed which is relatively high speed.

In a fifth aspect of the present invention, according to the above mentioned fourth aspect, the automatic clutch disconnection control during the vehicle speed is reduced is executed when the vehicle speed becomes equal to or less than threshold values (V1, V2), and a first threshold value (V1) for determining the execution of the automatic clutch disconnection control in the manual control intervention mode (M3) is set lower than a second threshold value (V2) for determining the execution of the automatic clutch disconnection control in the automatic control mode (M1).

According to this configuration, by setting the clutch disconnection execution determination threshold value in the manual control intervention mode lower than the clutch disconnection execution determination threshold value in the automatic control mode, it is possible to respect the intention of the driver as much as possible in the manual control intervention mode and to improve the lever feeling in the automatic control mode.

In a sixth aspect of the present invention, according to the above mentioned first or second aspect, the automatic clutch disconnection control during the vehicle speed is reduced is started when a predetermined parameter reaches a threshold value (V1, V2), and the threshold value (V1, V2) changes according to the gear position of the transmission (21) of the vehicle (1).

According to this configuration, the start timing of the automatic clutch disconnection control during the vehicle speed is reduced changes according to the gear position of the transmission, so that it is possible to set the automatic clutch disconnection control to be started earlier as the gear position is higher, for example, and it is possible to increase the certainty of avoiding engine stall.

In a seventh aspect of the present invention, according to the above mentioned sixth aspect, when the gear of the transmission (21) is on the high speed side with respect to the vehicle speed, a notification is given to the driver to urge the driver to perform a gear shift operation.

According to this configuration, by giving the notification when the gear position of the transmission is higher with respect to the vehicle speed, it is possible to increase the possibility of downshifting and to increase the certainty that the gear position is returned to the level corresponding to the low gear position before the vehicle stops. This reduces the possibility of starting the vehicle at a high gear position and suppresses deterioration of the clutch device.

### Advantageous Effects of Invention

According to the clutch control device of the present invention, in the clutch control device capable of performing manual operation and automatic operation of the clutch, it is possible to suppress a feeling of discomfort in clutch disconnection control during the vehicle speed is reduced.

### BRIEF DESCRIPTION OF DRAWINGS

[FIG. 1] A right side view of a motorcycle according to an embodiment of the present invention.
[FIG. 2] A cross-sectional view of a gearbox and a change mechanism of the motorcycle.
[FIG. 3] A block diagram of the gear shift system of the motorcycle.
[FIG. 4] An explanatory view showing a transition of a clutch control mode of the motorcycle.
[FIG. 5] A cross-sectional view taken along the axial direction of the clutch actuator.
[FIG. 6] A perspective view of a release shaft for operating a clutch device.
[FIG. 7] A cross-sectional view taken along line VII-VII of FIG. 5.
[FIG. 8A] A cross-sectional view corresponding to FIG. 7, showing an action of the release shaft in the half clutch region, and shows the operation when the release shaft is driven by the clutch actuator.
[FIG. 8B] A cross-sectional view corresponding to FIG. 7, showing an action of the release shaft in the half clutch region, and shows the case during manual intervention.
[FIG. 9A] A cross-sectional view corresponding to FIG. 7, showing an action of the release shaft in the standby position, and shows when the release shaft is driven by the clutch actuator.
[FIG. 9B] A cross-sectional view corresponding to FIG. 7, showing an action of the release shaft in the standby position, and shows during the manual intervention.
[FIG. 10A] A time chart showing a time variation of a parameter when performing an automatic clutch disconnection control in a comparable example.
[FIG. 10B] A time chart showing a time variation of a parameter when performing an automatic clutch disconnection control in the embodiment.
[FIG. 11] A time chart corresponding to FIG. 10B in a variant example of the embodiment.
[FIG. 12] A time chart corresponding to FIG. 10B in another variant example of the embodiment.
[FIG. 13] An explanatory diagram showing a basic control state of the clutch control device.
[FIG. 14] A flowchart showing a process for performing a clutch disconnecting rate limit setting.
[FIG. 15] A flowchart showing a process for performing an automatic mode return determination.
[FIG. 16] A flowchart showing a process for performing an engine stall suppressing determination control.

### DESCRIPTION OF EMBODIMENTS

Hereinafter, an embodiment of the present invention will be described below with reference to the drawings.

Further, in the following description, the directions such as the front, the rear, the left, and the right are the same as the directions in a vehicle described below unless otherwise specified. In addition, in the drawings used in the following description, an arrow FR indicating the front of the vehicle, an arrow LH indicating the left of the vehicle, and an arrow UP indicating the upper side of the vehicle are shown at appropriate positions. The term "intermediate" used in this embodiment means not only the center between the two ends of the object but also the inner range between the two ends of the object.

### <Entire vehicle>

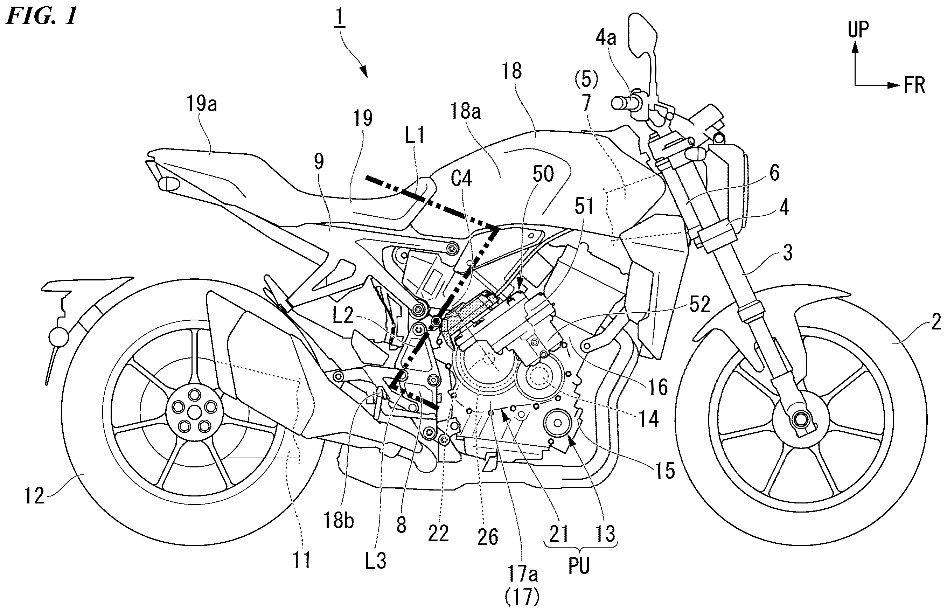

As shown in FIG. 1, the present embodiment is applied to a motorcycle 1 as an example of a saddle-ride type vehicle. The front wheel 2 of the motorcycle 1 is supported by the lower end portions of a pair of left and right front forks 3. The upper portions of the left and right front forks 3 are supported by a head pipe 6 at the front end of the vehicle body frame 5 via a steering stem 4. A bar-type steering handle 4a is attached onto the top bridge of the steering stem 4.

The vehicle body frame 5 includes the head pipe 6, main frames 7 extending downward and rearward from a center of the head pipe 6 in a vehicle width direction (leftward/rightward direction), pivot frames 8 provided below rear end portions of the main frames 7, and a seat frame 9 continuous with rear sides of the main frames 7 and the pivot frames 8. Front end portions of swing arms 11 are swingably axially supported by the pivot frames 8. A rear wheel 12 of the motorcycle 1 is supported by rear end portions of the swing arms 11.

A fuel tank 18 is supported above the left and right main frames 7. A front seat 19 and a rear seat 19a are supported above the seat frame 9 behind the fuel tank 18. Knee grip portions 18a recessed inward in a vehicle width direction are formed on both left and right sides of a rear portion of the fuel tank 18. The left and right knee grip portions 18a are formed to match the following areas. The areas are inner sides around left and right knees of a driver who sits on the front seat 19. Steps 18b are supported on both left and right sides below the front seat 19. The driver places feet in front of the ankles on the steps 18b.

A power unit PU including a prime mover of the motorcycle 1 is suspended below the main frames 7. The power unit PU integrally has an engine (internal combustion engine, prime mover) 13 located in the front thereof, and a gearbox (output object) 21 located in the rear thereof. The engine 13 is, for example, a multi-cylinder engine in which a rotary shaft of a crankshaft 14 is provided in a leftward/rightward direction (vehicle width direction).

The engine 13 has a cylinder 16 standing above a front portion of a crank case 15. A rear portion of the crank case 15 is a gearbox case 17 configured to accommodate the gearbox 21. A right cover 17a crossing a right side portion of the gearbox case 17 is attached to a right side portion of the crank case 15. The right cover 17a is a clutch cover configured to cover a clutch device 26. The power unit PU is linked to the rear wheel 12 via, for example, a chain type transmission mechanism (not shown).

### <Gearbox>

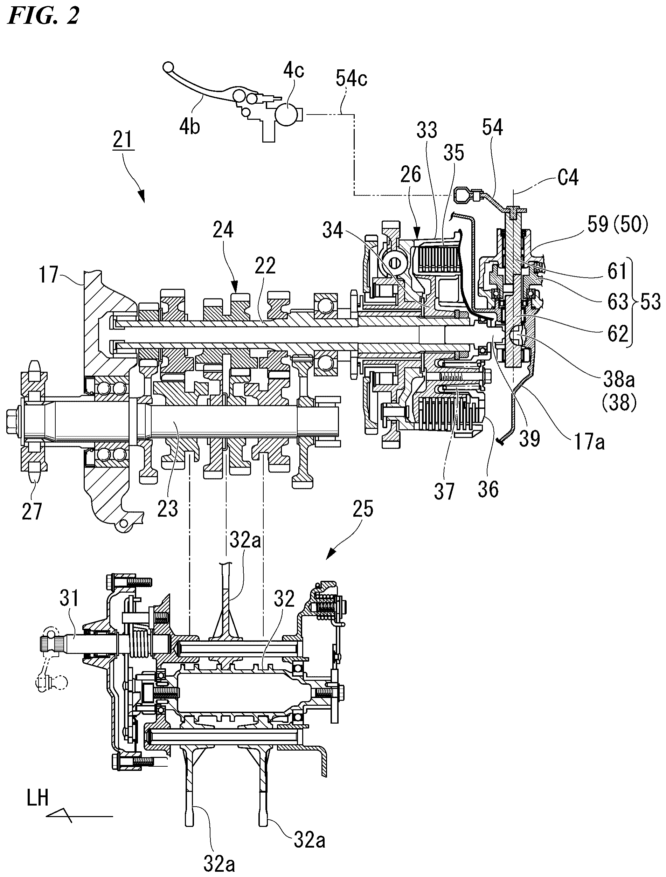

Referring also to FIG. 2, the gearbox 21 is a stepped transmission. The gearbox 21 has a main shaft 22 and a counter shaft 23, and a shifting gear group 24 that bridges between both the shafts 22 and 23. The counter shaft 23 constitutes an output shaft of the gearbox 21 and the power unit PU. A left end portion of the counter shaft 23 protrudes leftward from a rear portion of the gearbox case 17 and is connected to the rear wheel 12 via the chain type transmission mechanism.

The main shaft 22 and the counter shaft 23 of the gearbox 21 are disposed behind the crankshaft 14. The clutch device 26 is disposed coaxially with a right end portion of the main shaft 22. The clutch device 26 connects and disconnects power transmission between the crankshaft 14 of the engine 13 and the main shaft 22 of the gearbox 21. The clutch device 26 performs the connection and disconnection using at least one of an operation of a clutch operating element (for example, a clutch lever 4b) by an occupant or actuation of a clutch actuator 50, which will be described below.

The clutch device 26 is, for example, a wet type multi-plate clutch, a so-called normally closed clutch. Rotary power of the crankshaft 14 is transmitted to the main shaft 22 via the clutch device 26, and transmitted to the counter shaft 23 from the main shaft 22 via an arbitrary gear pair of the shifting gear group 24. A drive sprocket 27 of the chain type transmission mechanism is attached to a left end portion of the counter shaft 23 protruding leftward from a rear portion of the crank case 15.

A change mechanism 25 configured to switch a gear pair of the shifting gear group 24 is accommodated in the gearbox case 17 in the vicinity of the gearbox 21. The change mechanism 25 has a hollow cylindrical shift drum 32 parallel to both the shafts 22 and 23. The change mechanism 25 operates a plurality of shift forks 32a according to rotation of the shift drum 32. This operation is done according to a pattern of a lead groove formed in an outer circumference of the shift drum 32. According to this operation, the change mechanism 25 switches the gear pairs of the shifting gear group 24 used for power transmission between both the shafts 22 and 23.

Here, in the motorcycle 1, only a gear shifting operation (a foot operation of a shift pedal (not shown)) of the gearbox 21 is performed by a driver, and a connecting/disconnecting operation of the clutch device 26 is automatically performed by electric control according to the operation of the shift pedal. That is, the motorcycle 1 employs a so-called semi-automatic gear shift system (automatic clutch type gear shift system).

### <Gear shift system>

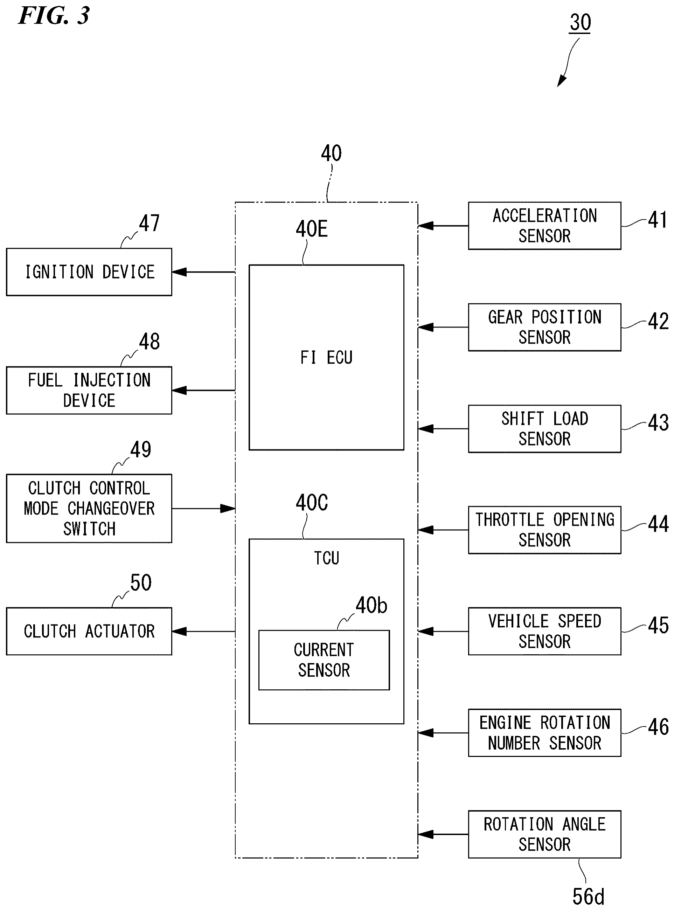

As shown in FIG. 3, a gear shift system 30 includes the clutch actuator 50, a control unit 40, various sensors 41 to 46, and various devices 47, 48 and 50.

The control unit 40 controls operations of the ignition device 47 and the fuel injection device 48, and controls an operation of the clutch actuator 50. This control is performed on the basis of detection information from the acceleration sensor 41, the gear position sensor 42, and the shift load sensor 43 (for example, a torque sensor), various types of vehicle state detection information from the throttle opening sensor 44, the vehicle speed sensor 45 and the engine rotation number sensor 46, and the like.

The acceleration sensor 41 detects a behavior of the vehicle body. The gear position sensor 42 detects a gear shifting stage from a rotation angle of the shift drum 32. The shift load sensor 43 detects an operation torque input to a shift spindle 31 (see FIG. 2) of the change mechanism 25. The throttle opening sensor 44 detects a throttle opening. The vehicle speed sensor 45 detects a vehicle speed. The engine rotation number sensor 46 detects an engine rotation number.

The control unit 40 includes a clutch control unit 40C and an engine control unit 40E which are independent of each other. The clutch control section 40C mainly controls the driving of the clutch actuator 50. The engine control unit 40E mainly controls the driving of the engine 13. The clutch control unit 40C and the engine control unit 40E are configured as, for example, ECU (Electronic Control Unit) that are separate from each other. The clutch control unit 40C and the engine control unit 40E may be integrated in the ECU as long as they perform independent control.

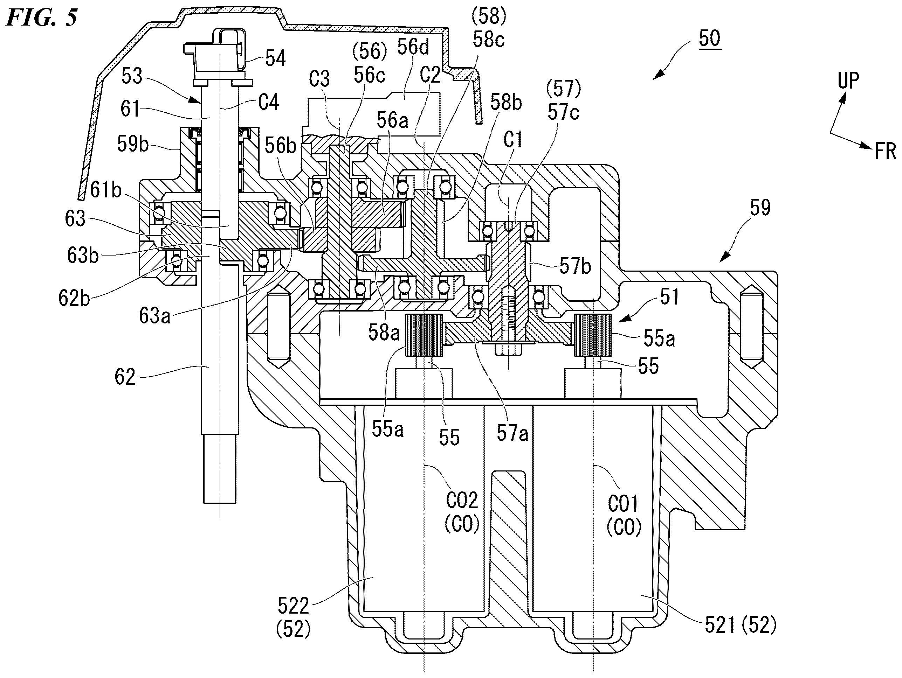

Referring also to FIG. 2 and FIG. 5, the clutch actuator 50 controls a working torque applied to a release shaft 53 in order to connect and disconnect the clutch device 26. The clutch actuator 50 includes an electric motor 52 (electric motor, hereinafter, simply referred to as the motor 52) as a driving source, and a speed reducing mechanism (reduction gear mechanism, transmission mechanism) 51 configured to transmit a driving force of the motor 52 to the release shaft 53. The speed reducing mechanism 51 includes a first reduction shaft 57, a second reduction shaft 58 and a third reduction shaft 56. For example, the third reduction shaft 56 is provided with a rotation angle sensor (rotation motion sensor) 56d for detecting, for example, a rotation angle of the third reduction shaft 56.

Referring to FIG. 3, the clutch controller 40C calculates the following current value on the basis of the previously set calculation program. The current value is a value of current supplied to the motor 52 in order to connect and disconnect the clutch device 26. The current supplied to the motor 52 is obtained from correlation with the torque output to the motor 52. The target torque of the motor 52 is proportional to a working torque (a driven clutch lever torque, which will be described later) given to the release shaft 53. The value of the current supplied to the motor 52 is detected by a current sensor 40b included in the clutch controller 40C. The operation of the clutch actuator 50 is controlled according to a change of the detected value. The clutch actuator 50 will be described below in detail.

### <Clutch device>

As shown in FIG. 2, the clutch device 26 of the embodiment is a multi-plate clutch obtained by stacking a plurality of clutch plates 35 in an axial direction, and a wet type clutch disposed in an oil chamber in the right cover 17a. The clutch device 26 includes an outer clutch 33, a center clutch 34, and the plurality of clutch plates 35.

The outer clutch 33 is driven by normally transmitting rotary power from the crankshaft 14. The center clutch 34 is disposed in the outer clutch 33 and supported by the main shaft 22 integrally rotatably. The plurality of clutch plates 35 are stacked between the outer clutch 33 and the center clutch 34 and frictionally engage them with each other.

A pressure plate 36 having substantially the same diameter as the clutch plates 35 is disposed on a right side of the stacked the clutch plates 35 (an outer side in the vehicle width direction). The pressure plate 36 receives an elastic load of a clutch spring 37 to be biased leftward, and pressure-welds (frictionally engages) the stacked clutch plates 35 with each other. Accordingly, the clutch device 26 is in a connected state in which power transmission is possible. The clutch device 26 is a normally closed clutch that becomes a connected state at normal times when there is no input from the outside.

Release of the pressure welding (frictional engagement) is achieved by an operation of a release mechanism 38 inside the right cover 17a. Actuation of the release mechanism 38 is achieved by at least one of an operation of a clutch lever 4b by an occupant and application of a torque by the clutch actuator 50.

### <Release mechanism>

As shown in FIG. 2, the release mechanism 38 includes a lifter shaft 39, and the release shaft 53.

The lifter shaft 39 is reciprocally held in a right side portion of the main shaft 22 in the axial direction. The release shaft 53 is disposed such that the lifter shaft 39 is perpendicular to the axial direction, and is held on an outer side portion of the right cover 17a to be rotatable around the axis.

Line C4 in the drawings indicates a center axis of the release shaft 53 extending in an upward/downward direction. The release shaft 53 is inclined rearward in the axial direction to be located rearward as it goes upward in a vertical direction when seen in the axial direction of the main shaft 22 (when seen in a side view of the vehicle) (see FIG. 1). The upper portion of the release shaft 53 protrudes outward from the right cover 17a, and a driven clutch lever 54 is integrally rotatably attached to an upper portion of the release shaft 53. The driven clutch lever 54 is connected to the clutch lever 4b via an operation cable 54c.

An eccentric cam portion 38a is provided on a lower portion of the release shaft 53 located inside the right cover 17a. The eccentric cam portion 38a is engaged with a right end portion of the lifter shaft 39. The release shaft 53 is pivoted around the axial center to move the lifter shaft 39 rightward using the action of the eccentric cam portion 38a. The lifter shaft 39 is configured reciprocally integrally with the pressure plate 36 of the clutch device 26. Accordingly, when the lifter shaft 39 is moved rightward, the pressure plate 36 is moved rightward (lifted) against the biasing force of the clutch spring 37. Accordingly, frictional engagement between the stacked clutch plates 35 is released. Accordingly, the normally closed clutch device 26 becomes a disconnected state in which power transmission is impossible.

Further, the release mechanism 38 is not limited to the eccentric cam mechanism and may include a rack and pinion, a feed screw, or the like. The mechanism configured to connect the clutch lever 4b and the driven clutch lever 54 is not limited to the operation cable 54c and may include a rod, a link, or the like. Further, a configuration may be provided in which an oil passage is provided between the clutch lever 4b and the release shaft 53, and the oil pressure generated by the master cylinder on the clutch lever 4b side is transmitted to the slave cylinder on the release shaft 53 side, so that the release shaft 53 is rotated by the operation of the slave cylinder.

### <Clutch control mode>

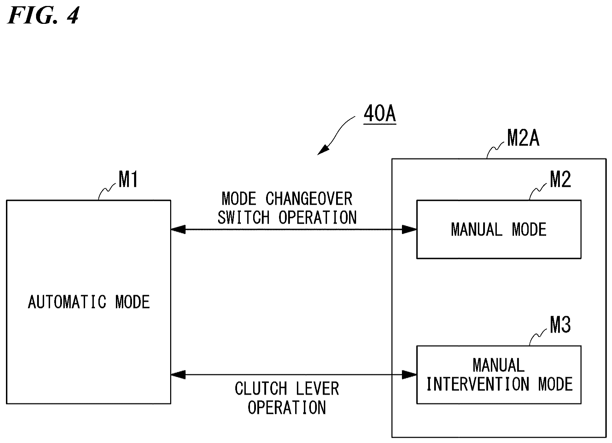

As shown in FIG. 4, a clutch control device 40A of the embodiment has three types of clutch control modes. The clutch control modes have an automatic mode M1 of performing automatic control, a manual mode M2 of performing a manual operation, and a manual intervention mode M3 of performing a temporary manual operation. The clutch control mode is appropriately transitioned between the three types of modes according to operations of a clutch control mode changeover switch 49 (see FIG. 3) and a clutch lever 4b. Further, an object including the manual mode M2 and the manual intervention mode M3 is referred to as a manual system M2A.

The automatic mode M1 is a mode of calculating a clutch capacity appropriate for a traveling state and controlling the clutch device 26 according to automatic departure/gear shifting control. The manual mode M2 is a mode of calculating a clutch capacity and controlling the clutch device 26 according to a clutch operation instruction by an occupant. The manual intervention mode M3 is a mode of receiving a clutch operation instruction from an occupant during the automatic mode M1, calculating a clutch capacity from the clutch operation instruction and controlling the clutch device 26, which is a temporary manual operation mode. Further, during the manual intervention mode M3, for example, when a state in which an occupant stops the operation of the clutch lever 4b (a fully released state) is continued for a prescribed time, it may be set to return to the automatic mode M1.

For example, the clutch control device 40A starts control from the clutch on state (connected state) in the automatic mode M1 when the system starts. In addition, the clutch control device 40A is set to return to the clutch on in the automatic mode M1 when the engine 13 stops (when the system is off). In the normally closed clutch device 26, when the clutch is on, there is no power supply to the motor 52 of the clutch actuator 50. Meanwhile, in the clutch off state (disconnect state) of the clutch device 26, power supply to the motor 52 is maintained.

The automatic mode M1 is based on automatic clutch control. The automatic mode M1 allows the motorcycle 1 to travel without lever operation. In the automatic mode M1, the clutch capacity is controlled based on the throttle opening, the engine rotation number, the vehicle speed, the shift sensor output, and the like. Accordingly, it is possible to start the motorcycle 1 only with throttle operation without engine stall (or engine stop). In addition, the motorcycle 1 can be shifted only by a shift operation. In addition, in the automatic mode M1, when the occupant grips the clutch lever 4b, it switches to the manual intervention mode M3. Accordingly, the clutch device 26 can be arbitrarily disconnected.

Meanwhile, in the manual mode M2, by the lever operation by the occupant, it is possible to control the clutch capacity (that is, to enable connection/disconnection of the clutch device 26). The automatic mode M1 and the manual mode M2 can be switched to each other. This switching is performed, for example, by operating the clutch control mode changeover switch 49 (see FIG. 3) while the motorcycle 1 is stopped and the gearbox 21 is in neutral. Further, the clutch control device 40A may include an indicator that indicates a manual state when transitioning to the manual system M2A (the manual mode M2 or the manual intervention mode M3).

The manual mode M2 is based on manual clutch control. The manual mode M2 can control the clutch capacity according to the operating angle of the clutch lever 4b (and thus the operating angle of the driven clutch lever 54). Accordingly, it is possible to control the connection/disconnection of the clutch device 26 according to the intention of the occupant.

For example, a clutch switch 4c is provided in a lever holder for holding the clutch lever 4b, and the clutch switch 4c is turned on when the clutch lever 4b is in gripped operation (when the clutch is disconnected) and is turned off when the clutch lever 4b is released as non-operation (when the clutch is connected). By turning on and off the clutch switch 4c, the control unit 40 can detect whether or not the driver has operated the clutch.

In the automatic mode M1, the connection/disconnection of the clutch device 26 is automatically performed by the clutch actuator 50. Here, by performing the manual clutch operation on the clutch lever 4b, it is possible to cause the automatic control of the clutch device 26 to temporarily intervene the manual operation (the manual intervention mode M3).

### <Manual clutch operation>

In the motorcycle 1 shown in FIG. 1, a clutch lever 4b as a clutch manual operator is attached to a base end side of a left grip of the steering handle 4a (an inner side in the vehicle width direction).

Referring also to FIG. 2, the clutch lever 4b is connected to the driven clutch lever 54 attached to the release shaft 53 of the clutch device 26 via an operation cable 54c. The driven clutch lever 54 is integrally rotatably attached to the upper end portion of the release shaft 53 protruding from the upper portion of the right cover 17a.

In addition, for example, the clutch control mode changeover switch 49 is provided on a handle switch (not shown) attached to the steering handle 4a. Accordingly, it is possible for the occupant to easily switch the clutch control mode during normal operation.

### <Clutch actuator>

As shown in FIG. 1, the clutch actuator 50 is attached to an upper portion of the right cover 17a of the crank case 15 on the right side.

Referring also to FIG. 5, the clutch actuator 50 includes the motor 52, and the speed reducing mechanism 51.

The motor 52 is, for example, a DC motor, and is disposed such that, for example, the release shaft 53 is parallel to the axial direction. The motor 52 is disposed such that a driving shaft 55 protrudes upward. The speed reducing mechanism 51 transmits a driving force of the motor 52 to the release shaft 53. Hereinafter, the axial direction common to the motor 52 and the release shaft 53 is referred to as an "actuator axial direction".

In the embodiment, a plurality of (two) motors 52 are provided in a single clutch actuator 50. Hereinafter, the motor 52 located in front of the clutch actuator 50 of the vehicle is referred to as a first motor 521, and the motor 52 located behind the first motor 521 of the vehicle and on an inner side in the vehicle width direction is referred to as a second motor 522. Lines C01 and C02 in the drawings indicate center axes (driving axes) of the motors 521 and 522, respectively. For convenience of description, both the motors 521 and 522 may be collectively referred to as the motor 52. In addition, both the axes C01 and C02 may be collectively referred to as an axis C0.

The speed reducing mechanism 51 reduces rotary power output from the motor 52 and transmits it to the release shaft 53. The speed reducing mechanism 51 includes, for example, a gear train in which the release shaft 53 is parallel to the axial direction. The speed reducing mechanism 51 includes driving gears 55a, a first reduction gear 57a, a first small diameter gear 57b, a second reduction gear 58a, a second small diameter gear 58b, a third reduction gear 56a, a third small diameter gear 56b, a driven gear 63a, and a gear case (mechanism case) 59.

The driving gears 55a is provided integrally with the driving shaft 55 of each of the motors 521 and 522. The first reduction gear 57a is meshed with each of the driving gears 55a. The first small diameter gear 57b is provided coaxially with the first reduction gear 57a. The second reduction gear 58a is meshed with first small diameter gear 57b. The second small diameter gear 58b is provided coaxially with the second reduction gear 58a. The third reduction gear 56a is meshed with second small diameter gear 58b. The third small diameter gear 56b is provided coaxially with the third reduction gear 56a. The driven gear 63a is meshed with the second small diameter gear 58b. The gear case 59 accommodates the gears.

The first reduction gear 57a and the first small diameter gear 57b are integrally rotatably supported by a first support shaft 57c. The first reduction gear 57a, the first small diameter gear 57b and the first support shaft 57c constitute the first reduction shaft 57. The second reduction gear 58a and the second small diameter gear 58b are integrally rotatably supported by a second support shaft 58c. The second reduction gear 58a, the second small diameter gear 58b and the second support shaft 58c constitute the second reduction shaft 58.

The third reduction gear 56a and the third small-diameter gear 56b are supported by a third support shaft 56c so as to be rotatable integrally with the third support shaft 56c. The third reduction gear 56a, the third small-diameter gear 56b, and the third support shaft 56c constitute a third reduction shaft 56. The third reduction gear 56a is a fan-shaped gear having a center at the third support shaft 56c. In the figure, a line C1 indicates the center axis of the first reduction shaft 57, a line C2 indicates the center axis of the second reduction shaft 58, and a line C3 indicates the center axis of the third reduction shaft 56.

The driven gear 63a is integrally rotatably provided on the release shaft 53. The driven gear 63a is a fan-shaped gear about the release shaft 53.

A gear of the speed reducing mechanism 51 on a downstream side has a small rotation angle. For example, the third reduction gear 56a and the driven gear 63a can be formed as fan-shaped gears with a small rotation angle.

As a result, the speed reducing mechanism 51 and the clutch actuator 50 can be reduced in size. That is, even when a large-diameter reduction gear is provided in order to increase the reduction ratio, the following effects can be obtained by cutting out portions other than the meshing range of the reduction gear to make it fan-shaped. That is, in particular, it is possible to suppress the speed reducing mechanism 51 from overhanging to the outer side in the vehicle width direction, and it is possible to reduce the weight of the speed reducing mechanism 51.

With such a configuration, the motor 52 and the release shaft 53 can always be interlocked via the speed reducing mechanism 51. Accordingly, a system is configured in which the clutch actuator 50 directly connects or disconnects the clutch device 26.

A rotation angle sensor 56d is provided on the upper surface of the gear case 59. The rotation angle sensor 56d is disposed outside the gear case 59, is connected to one end of the third reduction shaft 56 protruding outside the case, and detects the rotation angle of the third reduction shaft 56. By detecting the rotational angle of the third reduction shaft 56 close to the release shaft 53, the detection accuracy of the rotational angle of the release shaft 53 and thus the clutch capacity is enhanced.

The driving force of the motor 52 is reduced and transmitted to the release shaft 53 as follows. That is, the driving force of the motor 52 is reduced between the driving gears 55a and the first reduction gear 57a, reduced between the first small diameter gear 57b and the second reduction gear 58a, reduced between the second small diameter gear 58b and the third reduction gear 56a, and further, reduced between the third small diameter gear 56b and the driven gear 63a.

### <Disposition of clutch actuator>

As shown in FIG. 1, the clutch actuator 50 is disposed vertically below the knee grip portions 18a on the right side of the fuel tank 18 when seen in a side view of the vehicle. Line L1 in the drawings designates a femoral region of a driver's leg, Line L2 designates a lower leg from the knee, and Line L3 designates a foot from the ankle. As for the leg of the driver, when seen in a side view of the vehicle, the lower leg L2 extends obliquely rearward and downward from the knee grip portion 18a and the foot L3 is placed on the step 18b.

The clutch actuator 50 overhangs outward from the knee grip portions 18a in the vehicle width direction. The clutch actuator 50 is disposed so as to avoid the lower leg L2 of the driver's leg forward when seen in a side view of the vehicle. Accordingly, interference of the clutch actuator 50 with respect to the disposition space of the driver's leg is suppressed. The clutch actuator 50 is disposed so as to avoid the lower leg L2 of the driver's leg forward in the side view of the vehicle even when the driver extends the leg and lands the foot L3. In this respect as well, the interference of the clutch actuator 50 with respect to the disposition space of the driver's leg is suppressed.

### <Release shaft>

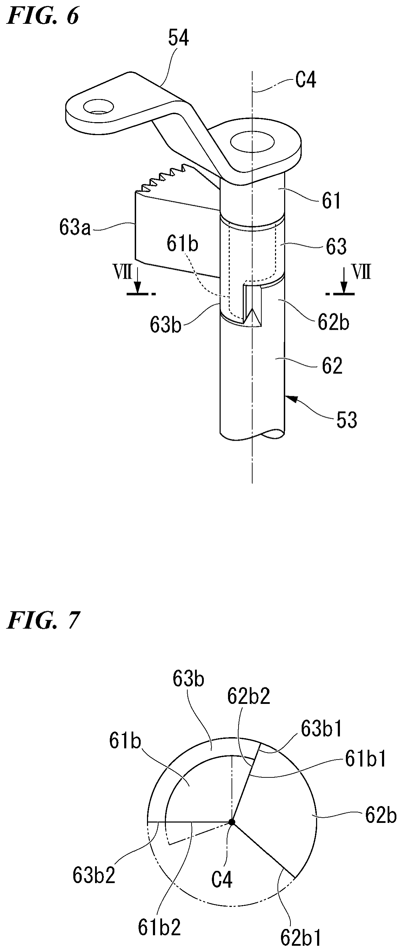

As shown in FIG. 5 and FIG. 6, the release shaft 53 is divided into a plurality of elements in order to be pivotable by individually receiving the input from the clutch actuator 50 and the input by the operation of the occupant.

The release shaft 53 includes an upper release shaft 61 that constitutes an upper portion, a lower release shaft 62 that constitutes a lower portion, and an intermediate release shaft 63. The intermediate release shaft 63 is disposed to bridge between the lower end portion of the upper release shaft 61 and the upper end portion of the lower release shaft 62.

The upper release shaft 61 is formed in a columnar shape. The upper release shaft 61 is rotatably supported by an upper boss portion 59b of the gear case 59. The upper release shaft 61 has an upper end portion protruding outward from the gear case 59. The driven clutch lever 54 is integrally rotatably supported by the upper end portion of the upper release shaft 61. A return spring (not shown) is attached to the driven clutch lever 54. This return spring applies a biasing force in a direction opposite to pivoting by the operation of the clutch lever 4b (pivoting in the clutch disconnecting direction) to the driven clutch lever 54.

The lower release shaft 62 is formed in a columnar shape. The lower release shaft 62 has a lower portion rotatably supported by an inner side of the right cover 17a. The lower portion of the lower release shaft 62 faces the inside of the gear case 59. The eccentric cam portion 38a of the release mechanism 38 is formed in the lower portion (see Fig. 2). A lower return spring (not shown) is attached to the lower end portion of the lower release shaft 62. This lower return spring applies a biasing force in a direction opposite to the pivoting in the clutch disconnecting direction to the lower release shaft 62.

Referring to Fig. 7, a manual operation-side cam 61b formed with a fan-shaped cross-section and extending in the axial direction is provided on a lower end portion of the upper release shaft 61.

A clutch-side cam 62b formed with a fan-shaped cross section and extending in the axial direction is provided on an upper end portion of the lower release shaft 62. The clutch-side cam 62b is provided within a range that avoids the manual operation-side cam 61b in the circumferential direction.

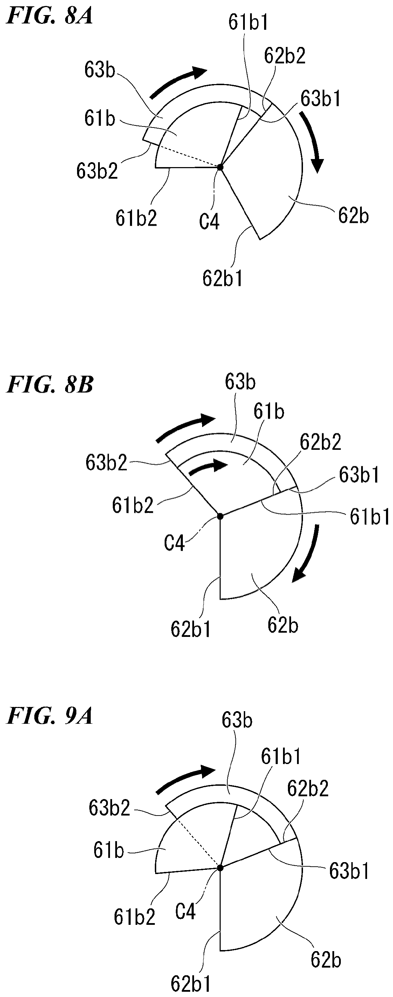

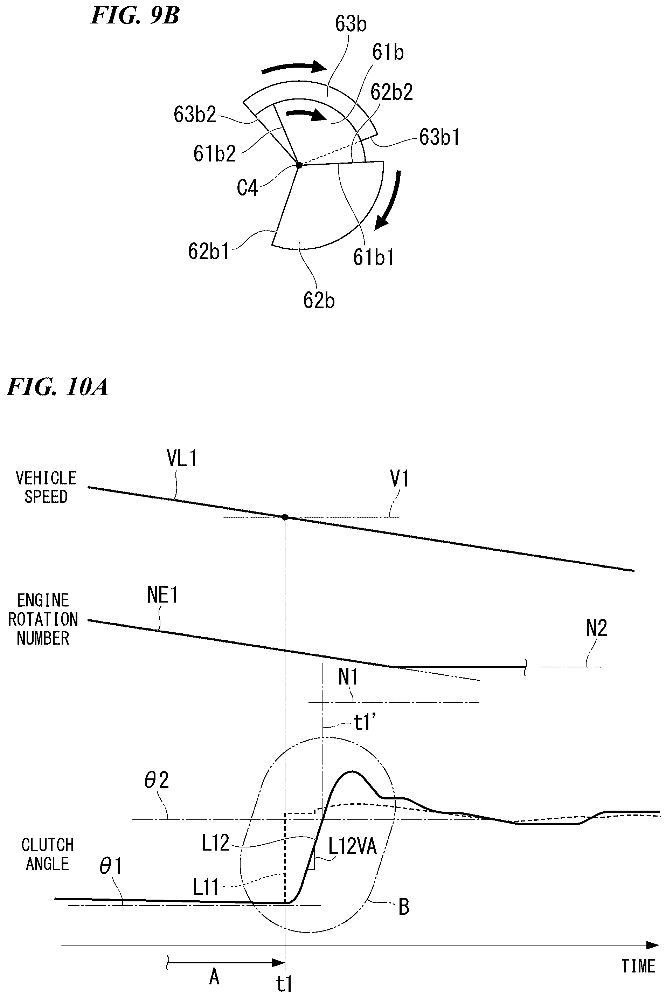

The lower end portion (the manual operation-side cam 61b) of the upper release shaft 61 and the upper end portion (the clutch-side cam 62b) of the lower release shaft 62 overlap each other in the axial direction while avoiding each other in the circumferential direction. Accordingly, it is possible to press one side surface 61b1 of the manual operation-side cam 61b in the circumferential direction against the other side surface 62b2 of the clutch-side cam 62b in the circumferential direction and rotate the lower release shaft 62 (see FIG. 8B and FIG. 9B).

The other side surface 61b2 of the manual operation-side cam 61b in the circumferential direction and one side surface 62b1 of the clutch-side cam 62b in the circumferential direction are separated from each other in the circumferential direction. Accordingly, when the clutch-side cam 62b has an input from the clutch actuator 50, the lower release shaft 62 can be rotated independently from the upper release shaft 61 (see FIG. 8A and FIG. 9A).

For example, the intermediate release shaft 63 is formed in a cylindrical shape. The intermediate release shaft 63 can be inserted through an engaging portion (upper and lower shaft engaging portions) between the lower end portion of the upper release shaft 61 and the upper end portion of the lower release shaft 62. The driven gear 63a is integrally rotatably supported by the intermediate release shaft 63.

A control operation-side cam 63b formed with a fan-shaped cross section and extending in the axial direction is provided on the intermediate release shaft 63.

The control operation-side cam 63b of the intermediate release shaft 63 and the clutch-side cam 62b of the lower release shaft 62 overlap each other in the axial direction while avoiding each other in the circumferential direction. Accordingly, it is possible to press one side surface 63b1 of the control operation-side cam 63b in the circumferential direction against the other side surface 62b2 of the clutch-side cam 62b in the circumferential direction and rotate the lower release shaft 62.

The control operation-side cam 63b is disposed to avoid the manual operation-side cam 61b of the upper release shaft 61 in the radial direction. Accordingly, when the input from the clutch actuator 50 is transmitted to the clutch-side cam 62b, the lower release shaft 62 can be rotated independently from the upper release shaft 61. In addition, when the manual operation is performed, the upper release shaft 61 can be rotated independently from the intermediate release shaft 63 on the control side.

The other side surface 63b2 of the control operation-side cam 63b in the circumferential direction and the one side surface 62b1 of the clutch-side cam 62b in the circumferential direction are separated from each other in the circumferential direction. Accordingly, when the clutch-side cam 62b has an input from a manual operation-side cam 63b, the lower release shaft 62 can be rotated independently from the intermediate release shaft 63.

Referring to FIG. 5, the clutch actuator 50 pivotably holds the upper release shaft 61 and the intermediate release shaft 63 with the gear case 59. The clutch actuator 50 includes the upper release shaft 61 and the intermediate release shaft 63. The lower release shaft 62 is rotatably held by the right cover 17a. The upper end of the lower release shaft 62 protrudes to the outside of the cover at the right cover 17a of the actuator mounting portion and is inserted into the gear case 59.

In such a configuration, when the clutch actuator 50 is attached to the right cover 17a, the linear release shaft 53 is configured together with the lower release shaft 62 located at the side closer to the right cover 17a. The release shaft 53 is configured by connecting the upper release shaft 61, the intermediate release shaft 63 and the lower release shaft 62 to each other.

The power unit PU of the embodiment can be configured as follows for a manual clutch type power unit that performs the connecting/disconnecting operation of the clutch device 26 by the operation of the driver without electric control. That is, the power unit PU can be configured by replacing the right cover 17a and the release shaft 53 and retrofitting the clutch actuator 50. For this reason, the clutch actuator 50 can also be attached to power units of different models. For this reason, a semi-automatic gear shift system (automatic clutch type gear shift system) can be easily configured by sharing the clutch actuator 50 among many models.

### <Two Motor Control>

Referring to FIG. 5, in the embodiment, two motors 521,522 in the clutch actuator 50 may cooperate to drive the release shaft 53 (to connect and disconnect the clutch device 26). In this case, the load shared by the two motors 521,522 is halved, so that the size of each motor 521,522 can be reduced. This increases the degree of freedom in the layout of the motor 52 as compared with the case where a single motor 52 is provided in a large size. Therefore, even when the clutch actuator 50 is disposed on the outer side of the power unit PU, the clutch actuator 50 is easily prevented from being extended outward in the vehicle width direction. Therefore, the clutch control device 40A can be substantially miniaturized.

In the embodiment, in the clutch actuator 50, one of the plurality (two) motors 52 may be used as a drive source of the release shaft 53 in a normal time (non-fail time), and the remaining one may be used for another purpose. For example, the action of the remaining motor 52 may be saved for fail-safe purposes or may be used as a current sensor.

### <Basic Control State of Clutch Control Device>

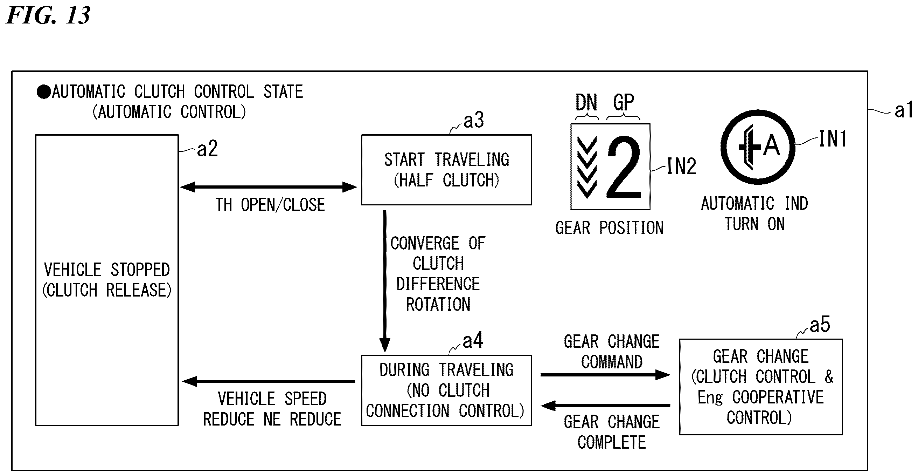

FIG. 13 shows the basic control state of the clutch control device 40A after the system is started. For example, when the ignition is turned on (main switch is turned on, system operating) from the time when the gearbox 21 is in the neutral state, the clutch control device 40A is in the clutch automatic control state (automatic mode M1) (see a1 in the figure). At this time, the clutch actuator 50 is driven to release (disconnect) the clutch device 26 (see a2 in the figure). When the gearbox 21 is shifted into the in-gear state and the throttle is opened from this state, the starting control of the motorcycle 1 including the half clutch control is performed (see a3 in the figure).

At this time, the clutch control device 40A increases the vehicle speed while operating the clutch device 26 to the engagement side (connection side) so that the rotation difference (clutch difference rotation) between the upstream side and the downstream side of the clutch device 26 converges to zero while the clutch switch 4c is kept off (no operation of the clutch lever 4b). The control in which the clutch device 26 is controlled to be released (disconnected) when the motorcycle 1 is stopped is performed regardless of whether the gearbox 21 is in the neutral or in gear state.

When the automatic clutch control (automatic mode M1) is executed, the first indicator IN1 in the meter device of the motorcycle 1 is turned on to notify the driver that the automatic clutch control is being executed. When a downshift request described below is made, the driver is notified of the downshift request by using the second indicator IN2 in the meter device.

The second indicator IN2 has a configuration in which a gear position indicator GP is provided with a downshift indicator DN and the background color can be changed. For example, when the vehicle is stopped with the shift device 21 in the high gear, the shift down indicator DN is turned on and the background color is set to warning color in order to alert the driver. When the motorcycle 1 starts moving with the shift gear 21 in the high gear position, the warning color flashes to alert the driver stronger. The second indicator IN2 may be activated not only when the vehicle is stopped and started but also when the vehicle is moving. For example, when the gear of the transmission 21 is in excessively high gear with respect to the current vehicle speed, the second indicator IN2 may light or blink the shift down indicator DN to prompt the driver to perform the gear shifting operation.

During the travel in the clutch engaged state (clutch differential rotation 0), the clutch automatic control is interrupted and the drive of the clutch actuator 50 is stopped (see a4 in the figure). When the clutch control device 40A is in the automatic clutch control (automatic mode M1), the first indicator IN1 is turned on regardless of whether the clutch actuator 50 is driven, so that the driver can recognize that the clutch control device 40A is in the automatic clutch control (automatic mode M1).

In the clutch automatic control, the gear change of the gearbox 21 can be performed only by the driver operating the shift operator (see a5 in the figure). At this time, the clutch control and the engine cooperative control are executed with the shift operation as the gear change command. After the gear change is completed, the automatic clutch control is returned to the interrupted state.

### Automatic Clutch Disconnection Control

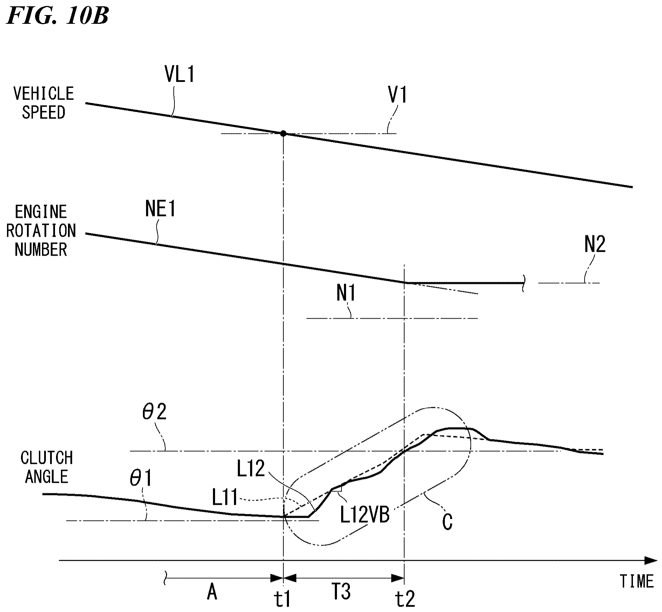

Next, the automatic clutch disconnection control according to the embodiment will be described with reference to the graphs of FIGS. 10A and 10B. This control is for avoiding engine stall by automatically shifting to the clutch disengaged state when the motorcycle decelerates and going to stop in the clutch engaged state.

The graphs of FIGS. 10A and 10B show the time variation of the main parameters when the automatic clutch disconnection control is performed. The lower part of the graph shows the clutch operating angle (hereinafter referred to simply as the clutch angle), the upper part of the graph shows the vehicle speed, and the middle part of the graph shows the engine speed. The horizontal axis of the graph indicates time.

For example, the clutch angle is an angle detected by the rotation angle sensor 56d, and is a value for detecting the clutch capacity. For example, the rotational angle of the release shaft 53 or the driven clutch lever 54 may be detected as another value for detecting the clutch displacement.

The clutch automatic disconnection control is performed when the clutch control mode is the auto mode M1 or the manual intervention mode M3. FIGS. 10A and 10B show the automatic clutch disconnection control in the manual intervention mode M3.

The clutch angle is a parameter relating to the clutch capacity, and a control target value thereof (see a line L11 in the figure) is calculated by multiplying the rotation angle of the motor 52 by the reduction ratio of the reduction mechanism 51, for example. The control target value indicated by the line L11 in the figure is a control target value of the clutch angle (clutch control target angle) when the clutch device 26 is operated by the motor 52. A line L12 in the figure indicates the actual measurement value of the clutch angle.

In the normally closed clutch, when the clutch angle is "0", the clutch device 26 has no operation input (input to the disconnection side) from the driver and the motor 52, and the clutch capacity becomes 100%. That is, when the clutch angle is "0", the clutch device 26 is in the connected state (engaged state). This state corresponds to the region A on the horizontal axis in the figure. In the region A, the clutch control target angle L11 is set in the vicinity of the predetermined clutch engagement angle θ1.

Referring to the line VL1 in the upper part of the graph, when the vehicle speed of the motorcycle 1 gradually decreases while the clutch device 26 remains in the connected state and the vehicle speed decreases to the first disconnection determination value (first threshold value) V1, the automatic clutch disconnection control is started at this timing t1. At this time, the clutch control target angle L11 changes from the clutch engagement angle θ1 to the clutch disconnection angle θ2, and the control unit 40 drives the motor 52 to operate the clutch device 26 toward the disconnection side via the release shaft 53 and the like. For example, the start timing t1 of the automatic clutch disconnection control is not limited to the timing when the vehicle speed reaches the threshold value, and may be the timing when the engine speed reaches the threshold value.

When the actual clutch angle L12 reaches the clutch disconnection angle θ 2 by following the change of the clutch control target angle L11, the clutch device 26 is brought into the disconnected state. For example, in the automatic clutch disconnection control, after the clutch device 26 is automatically disconnected, the clutch disconnection state is maintained until the throttle opening operation is performed or the vehicle speed increases due to a downhill or the like and exceeds the first disconnection determination value V1.

As shown in FIG. 10A, in the automatic clutch disconnection control, when the clutch control target angle L11 rises from the clutch engagement angle θ1 to the clutch disconnection angle θ2 at once, the motor 52 is driven so as to follow the rise of the clutch control target angle L11, and the actual measured value L12 of the clutch angle sharply increases. The automatic clutch disconnection control (part B in the figure) in FIG. 10A corresponds to control for disconnecting the clutch device 26 in response to a shift operation of the transmission 21 (operation of the shift pedal). In FIG. 10A, the inclination (rate of change) when the clutch angle changes from the clutch engagement angle θ1 to the clutch disconnection angle θ2 is equivalent to infinity at the clutch control target angle L11, and therefore the inclination of the actual measurement value L12 is applied as a substantial value. In the figure, a reference numeral t1' indicates a timing at which the actual measurement value L12 becomes the clutch disconnection angle θ2.

In the automatic clutch disconnection control of FIG. 10A, the clutch device 26 is suddenly disconnected, and the clutch lever 4b experiences a sudden change in lever reaction force. Such behavior can be assumed by the driver during the shift operation, but in the case of clutch disconnection control during the vehicle speed is reduced, the behavior of the clutch lever 4b occurs unexpectedly for the driver, and when the driver puts his / her hand on the clutch lever 4b, the driver feels discomfort.

Therefore, as shown in FIG. 10B, in the automatic clutch disconnection control of the embodiment, the clutch control target angle L11 is gradually increased from the clutch connection angle θ1 to the clutch disconnection angle θ2 during the first change time T3 (part C in the figure). By providing the change time T3, the actual clutch angle measurement value L12 is also increased substantially in accordance with the clutch control target angle L11. In the figure, reference numeral t2 denotes a timing at which the actual measurement value L12 becomes the clutch disconnection angle θ2.

In the automatic clutch disconnection control of FIGS. 10A and 10B, regarding each of the rate of change (inclination) of the actual measurement value L12 of the clutch angle, the inclination (rate of change, clutch disconnection speed L12VA) of the actual measurement value L12 of FIG. 10A is larger than the inclination (rate of change, clutch disconnection speed L12VB) of the actual measurement value L12 of FIG. 10B as a whole. In other words, the clutch disconnection speed L12VB in the automatic clutch disconnection control of FIG. 10B is set to be lower than the clutch disconnection speed L12VA in the automatic clutch disconnection control of FIG. 10A.

In the automatic clutch disconnection control of FIG. 10B, the clutch device 26 is gradually disconnected by performing the clutch disconnection during the first change time T3, and the reaction force of the clutch lever 4b is also gradually changed, so that the driver can hardly feel discomfort.

In particular, when the control mode is the manual system, the driver often puts his / her finger on the clutch lever 4b because the driver operates the clutch lever 4b. Therefore, the unintended behavior of the clutch lever 4b tends to give the driver a sense of discomfort. In the release shaft 53 connected to the clutch lever 4b by the operation cable 54c, when the motor 52 is driven to rotate the intermediate release shaft 63 on the motor side and the lower release shaft 62 on the clutch side, the upper release shaft 61 on the lever side is disengaged from the lower release shaft 62. As a result, only the reaction force of the return spring acts on the upper release shaft 61, and the operation reaction force of the clutch lever 4b is suddenly reduced, causing a behavior of the clutch lever 4b.

On the other hand, in the automatic clutch disconnection control of the embodiment, the clutch device 26 is gently disconnected by the control using the relaxed angle rate limit described later, so that the change in the lever reaction force is made gentle, and the discomfort given to the driver can be suppressed. Further, by gently disconnecting the clutch device 26, it is possible to suppress the influence on the vehicle body behavior at low speed.

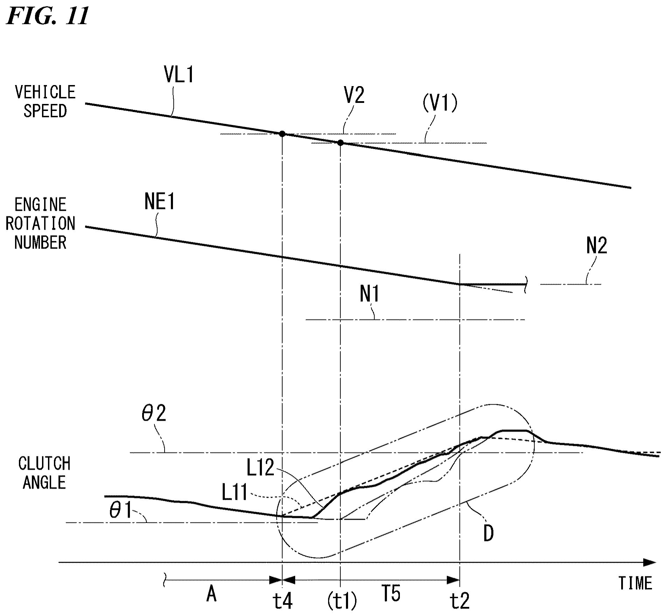

FIG. 11 shows the time variation of the parameters when the clutch control mode is the auto mode M1. In the auto mode M1, since the clutch operation by the driver is not performed, the clutch operation by the automatic control can be prioritized. That is, for example, at the vehicle speed, a second disconnection determination value (second threshold value) V2 higher than the first disconnection determination value V1 can be set, and the automatic clutch disconnection control can be started at the time when the vehicle speed decreases to the second disconnection determination value V2 (timing t4). The start timing t4 of the automatic clutch disconnection control in FIG. 11 is not limited to the timing when the vehicle speed reaches the threshold value, and may be the timing when the engine speed reaches the threshold value.

In this case, the actual clutch angle measurement value L12 is gradually increased during a second change time T5, which is longer than the first change time T3, until the actual clutch angle measurement value L12 changes from the clutch engagement angle θ1 to the clutch disconnection angle θ2 (from the timing t4 to the timing t2) (part D in the figure). Thus, the clutch device 26 is more gently disconnected, and the change of the lever reaction force and the influence on the vehicle body behavior are suppressed, so that the quality of the auto mode M1 can be improved.

The example of FIG. 11 is an example of setting a plurality of threshold values of the vehicle speed related to the start timing of the automatic clutch disconnection control, and the following configuration is given as another example.

As another example, the threshold value of the vehicle speed related to the start timing of the automatic clutch disconnection control may be set for each gear position of the transmission 21. That is, even if the engine does not stall in the first gear, the engine may stall in the second or higher gear because of the reaction force from the wheel. Therefore, in the high gear, it is preferable to set a plurality of the threshold values by increasing the threshold values in stages, and to secure a change time as the speed increases, and to start the automatic clutch disconnection control with a margin. When the transmission 21 is a continuously variable transmission, a virtual gear may be set within the operating range of an appropriate shift operating element, and a plurality of threshold values may be set in the same manner as described above.

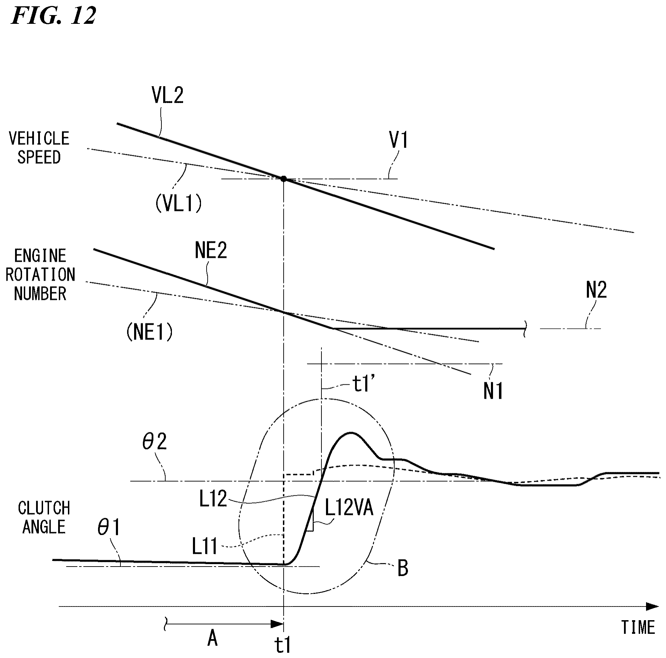

FIG. 12 shows the time variation of the parameters when the rate of reduction in vehicle speed is large (when the vehicle is rapidly decelerated).

When the rate of reduction in the vehicle speed is large (see the line VL2 having a larger inclination than the line VL1), the following events are predicted when the clutch is disengaged during the above mentioned change time T3 or T5. That is, it is predicted that at least one of the vehicle speed and the engine speed (in the embodiment, the engine speed) becomes equal to or less than the engine stall determination value (N1) before the clutch is disengaged. In this case, priority is given to the avoidance of engine stall rather than the suppression of the uncomfortable feeling, and the clutch is quickly disengaged as in the case of the portion B in FIG. 10A.

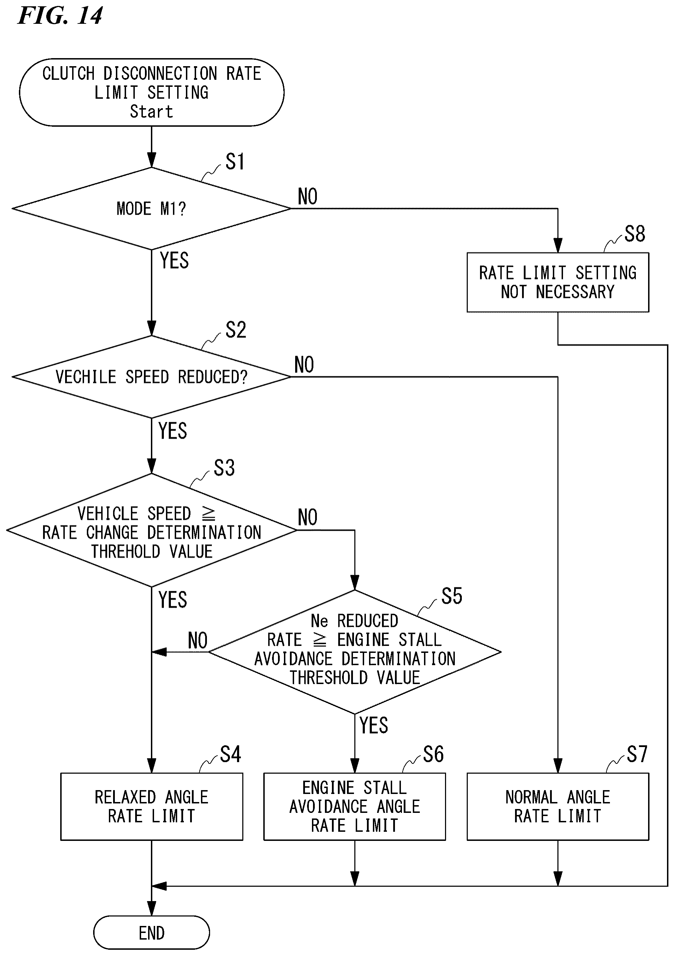

Next, a process (clutch disconnection rate limit setting) performed by the control unit 40 when the automatic clutch disconnection control is performed will be described with reference to a flowchart of FIG. 14.

The "rate limit setting" is a process of setting any one of the following normal angle rate limit, relaxed angle rate limit, and angle rate limit for avoiding engine stall.

First, in step S1, it is determined whether the current clutch control mode is the auto mode M1. If YES (the auto mode M1) in step S1, the process proceeds to step S2. If NO (not the auto mode M1) in step S1, that is, if the mode is the manual mode M2 or the manual intervention mode M3, the rate limit setting is not necessary (step S8), and the process is temporarily ended. In the manual mode M2, the clutch control itself is not performed. In the manual intervention mode M3, the clutch is not automatically disengaged basically, and after the conditions for returning to the auto mode M1 are satisfied during the manual intervention mode M3, the clutch is disengaged after returning to the auto mode M1.

In step S2, it is determined whether the vehicle speed is decreasing. If YES (vehicle speed is decreasing) in step S2, the process proceeds to step S3. If NO (vehicle speed is not decreasing) in step S2, the automatic clutch disconnection control is performed using the normal angle rate limit (step S7). The "control using the normal angle rate limit" is a control (control during gear shifting) corresponding to the part B in FIG. 10A. The "normal angle rate limit" indicates an upper limit of a rate of reduction (rate of reduction) of a control target value of the clutch angle (clutch control target angle) per unit time. The normal angular rate limit of the embodiment is greater than the relaxed angular rate limit described below.

In step S3, it is determined whether the vehicle speed is equal to or higher than the rate change determination threshold value W1. The rate change determination threshold value W1 is a value determined in advance by a test or the like as a value that can complete clutch disconnection without causing engine stall even when the automatic clutch disconnection control is performed using the relaxed angle rate limit. If YES in step S3 (the vehicle speed is equal to or higher than the rate change determination threshold value W1 (the vehicle speed is still high)), the automatic clutch disconnection control is performed using the relaxed angle rate limit (step S4). In this case, since the clutch device is already in the disconnected state, step S5 is substantially completed. If NO (vehicle speed is equal to or higher than the rate change determination threshold value W1 (vehicle speed is low)) in step S3, the process proceeds to step S5.

In step S5, it is determined whether the rate of reduction in the engine speed is equal to or greater than the engine stall avoidance determination threshold value W2. The engine stall avoidance determination threshold value W2 is a value determined in advance by a test or the like as a value indicating that the possibility of engine stall is high in a state where the vehicle speed is lower than the rate change determination threshold value W1. Referring to FIGS. 10B and 11, for example, the determination in step S5 corresponds to a determination as to whether or not the engine speed is predicted to be equal to or less than the engine stall determination value N1 when the clutch is disengaged during the change time T3 or T5 based on the engine speed reduction rate. In the patterns of the respective drawings, the engine speed after the clutch disconnection is the idle speed N2.

If YES in step S5 (the rate of reduction in the engine speed is equal to or greater than the engine stall avoidance determination threshold value W2 (the engine speed is rapidly decreasing)), the automatic clutch disconnection control is performed using the engine stall avoidance angle rate limit (step S6). The "control using the engine stall avoidance angle rate limit" is a control (control at the time of gear shifting) corresponding to the part B in FIG. 10A, similarly to the "control using the normal angle rate limit", and the clutch is quickly disengaged. The normal angle rate limit is set later than the angle rate limit for avoiding engine stall and the relaxed angle rate limit. The angle rate limit for avoiding engine stall and the normal angle rate limit may be the same as each other or may be different from each other depending on the specifications. This can avoid the possibility of engine stall. If NO (the rate of reduction in the engine speed is less than the engine stall avoidance determination threshold value W2 (the engine speed is gently decreasing)) in step S5, the process proceeds to step S4, and the automatic clutch disconnection control using the relaxed angle rate limit is performed. The "control using the relaxed angle rate limit" is a control corresponding to the part C of FIG. 10B and the part D of FIG. 11, and can be said to be "control using the angle rate limit for improving the lever feeling".

The "relaxed angle rate limit" is an upper limit of the rate of reduction of the clutch control target angle, and is smaller than the normal angle rate limit described above. By performing the automatic clutch disconnection control using the relaxed angle rate limit, the clutch control target angle is gradually increased to disconnect the clutch device 26, and the behavior of the clutch lever 4b is suppressed, so that the driver's discomfort can be reduced even when the driver's hand is on the clutch lever. Further, it is also possible to suppress the electric energy required for driving the motor 52, the deviation between the target value and the actual measurement value of the clutch angle, and the overshoot of the actual measurement value of the clutch angle.

### <Processing after Manual Intervention>

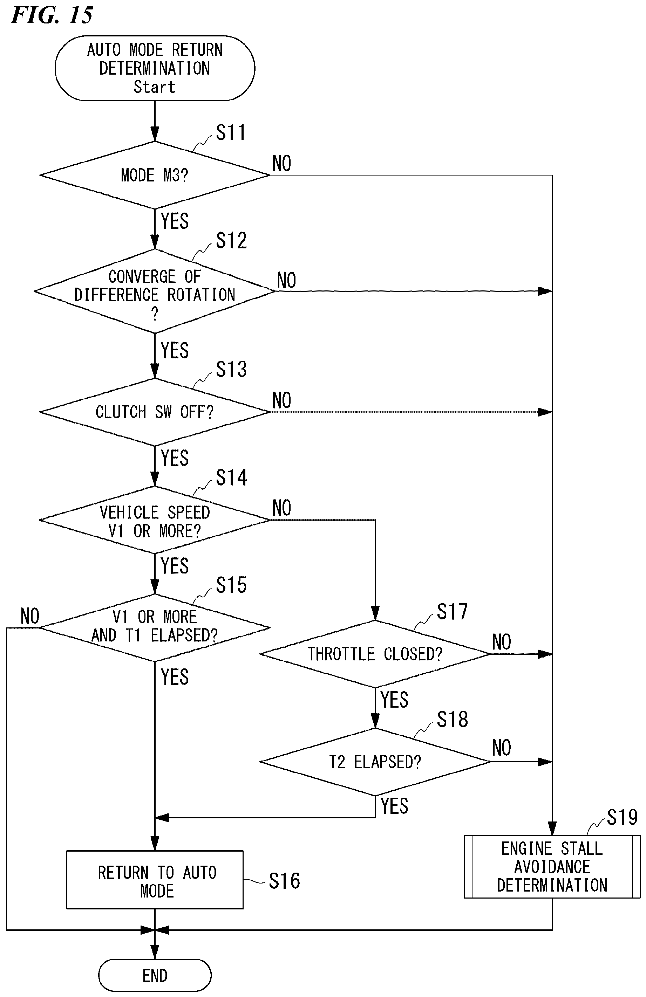

Next, the processing performed by the control unit 40 when the automatic mode return control is performed after the manual intervention will be described with reference to the flowchart of FIG. 15.

First, in step S11, it is determined whether the clutch control mode is the manual intervention mode M3. If YES (i.e., the manual intervention mode M3) in step S11, the process proceeds to step S12. If NO (not the manual intervention mode M3) is determined in step S11 (for example, if the mode changeover switch 49 is operated to the manual mode M2), the automatic mode return control is not performed, and the process proceeds to engine stall avoidance determination of step 19.

In step S12, it is determined whether the differential clutch rotation has converged (whether the differential clutch rotation is less than the differential rotation threshold value Ne1). This determination corresponds to a determination as to whether or not there is no differential clutch rotation (clutch engaged state). If YES (the differential clutch rotation has converged) in step S12, the process proceeds to step S13. If NO (the differential clutch rotation has not converged) in step S12, the automatic mode return control is not performed, and the process proceeds to engine stall avoidance determination of step 19. The case where the differential clutch rotation is not converged corresponds to a state where the clutch device 26 slips due to a half clutch or the like.

In step S13, it is determined whether the clutch switch 4c is OFF (whether the clutch lever 4b is not operated). If YES (no operation of the clutch lever 4b) in step S13, the process proceeds to step S14. If NO (the clutch lever 4b is operated) in step S13, the automatic mode return control is not performed, and the process proceeds to engine stall avoidance determination of step 19.

In step S14, it is determined whether the vehicle speed is equal to or higher than a first threshold value V1. The threshold value V1 of the vehicle speed in step S14 is a value which becomes a boundary between the low vehicle speed region and the medium vehicle speed region, and corresponds to, for example, 1600 rpm in engine rotation speed. In step S14, the differential clutch rotation is converged and the clutch lever 4b is not operated, and therefore, the vehicle speed is proportional to the engine rotation speed. Therefore, although the gear information of the gearbox 21 is also required, the step S14 can be replaced with a determination as to whether or not the engine rotation speed is equal to or higher than the threshold value. If YES (vehicle speed is equal to or higher than the first threshold value V1) in step S14, the process proceeds to step S15. If NO (vehicle speed is less than the first threshold value V1) in step S14, the process proceeds to step S17.

In step S15, it is determined whether the return time T has passed the first return time T1. The first return time T1 in a case the vehicle speed is equal to or higher than the first threshold value V1 is set to, for example, 1 second. In the medium vehicle speed region (for example, 1600 rpm or more), the possibility that the driver operates the clutch device 26 is lower than that in the low vehicle speed region (for example, less than 1600 rpm). Therefore, even if it is returned to the automatic mode M1 in a short time, the possibility of giving the driver a sense of discomfort is low. If YES (the first return time T1 has elapsed) in step S15, the process proceeds to step S16, and the automatic mode return control is performed. If the answer to the question of step S15 is NO (the first return time T1 has not elapsed), the automatic mode return control is not performed, and the process is temporarily terminated.

In step S17, it is determined whether the throttle is in a closed state (whether the driver has no intention to drive). In the low vehicle speed region (for example, less than 1600 rpm), the possibility that the driver continuously operates the clutch device 26 is higher than in the medium vehicle speed region (for example, 1600 rpm or more). Therefore, if the engine returns to the automatic mode M1 without any condition, the clutch operation of the driver may be affected to give a feeling of discomfort. If YES (there is no intention to drive) in step S17, the process proceeds to step S18. If NO (there is intention to drive) in step S17, the automatic mode return control is not performed, and the process proceeds to engine stall avoidance determination of step 19.

In step S18, it is determined whether or not a second return time T2 longer than the first return time T1 has elapsed in the throttle closed state. If YES (the second return time T2 has elapsed) in step S18, it is determined that the driver has no intention of operating the clutch device 26, and the process proceeds to step S16 to perform the auto mode return control. If the answer to the question of step S18 is NO (the second return time T2 has not elapsed), the process proceeds to step S19 for engine stall avoidance determination.

### <Engine stall avoidance judgment>

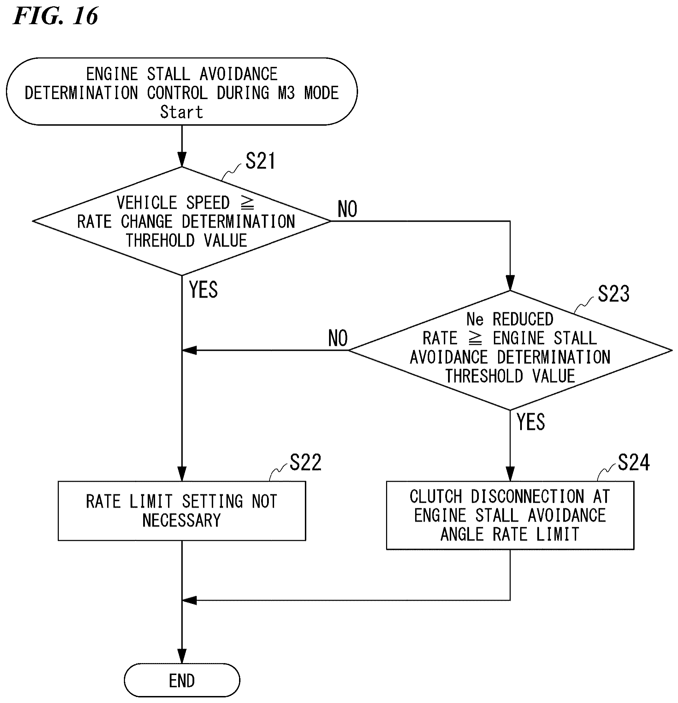

Next, a process performed by the control unit 40 when the clutch is disengaged using the engine stall avoidance angle rate limit when the possibility of engine stall occurs when the return condition is not satisfied in the manual intervention mode M3 will be described with reference to the flowchart of FIG. 16.

First, in step S21, it is determined whether the vehicle speed is equal to or higher than the rate change determination threshold value W1. If YES in step S21 (the vehicle speed is equal to or higher than the rate change determination threshold value W1 (the vehicle speed is still high)), it is determined that the rate limit setting is not necessary (step S22), and the process is temporarily ended. If NO (vehicle speed is equal to or higher than the rate change determination threshold value W1 (vehicle speed is low)) in step S21, the process proceeds to step S23.

In step S23, it is determined whether the vehicle speed is equal to or higher than the rate change determination threshold value W1. If YES in step S21 (the vehicle speed is equal to or higher than the rate change determination threshold value W1 (the vehicle speed is still high)), it is determined that the rate limit setting is not necessary (step S22), and the process is temporarily ended. If NO (vehicle speed is equal to or higher than the rate change determination threshold value W1 (vehicle speed is low)) in step S21, the process proceeds to step S23.

In step S23, it is determined whether the rate of reduction in the engine speed is equal to or greater than the engine stall avoidance determination threshold value W2. If YES in step S23 (the rate of reduction in the engine speed is equal to or greater than the engine stall avoidance determination threshold value W2 (the engine speed is rapidly decreasing)), the automatic clutch disconnection control is performed even in the manual intervention mode M3 (step S24). Thus, even if the clutch control mode is the manual system, the clutch control is intervened to avoid the possibility of engine stall. If NO (the rate of reduction in the engine speed is less than the engine stall avoidance determination threshold value W2 (the engine speed is gently decreasing)) in step S23, the rate limit setting is not necessary (step S22), and the process is temporarily ended.

As described above, the clutch control device 40A of the present invention is a clutch control device 40A comprising a clutch device 26 that is configured to disconnect and connect power transmission between the engine 13 and the transmission 21 of the motorcycle 1, a clutch actuator 50 that is configured to operate the clutch device 26, and a control unit 40 that is configured to control the drive of the clutch actuator 50, wherein the control unit 40 performs automatic clutch disconnection control which automatically disconnects the clutch device 26 during a gear shift is performed and a vehicle speed is reduced, and sets the clutch disconnection speed (the rate of change of the actual measurement value L12 of the clutch angle in FIG. 10B) L12VB of the automatic clutch disconnection control during the vehicle speed is reduced to a speed lower than the clutch disconnection speed (the rate of change of the actual measurement value L12 of the clutch angle in FIG. 10A) L12VA of the automatic clutch disconnection control during the gear shift is performed.

According to this configuration, by setting the clutch disconnection speed L12VB of the clutch automatic disconnection control during the vehicle speed is reduced to be lower than the clutch disconnection speed L12VA of the clutch automatic disconnection control during the gear shift is performed, it is possible to suppress the occurrence of an unexpected movement due to the sudden clutch disconnection control in the clutch operating element touched by the driver, and to suppress the occurrence of a sense of discomfort in the automatic clutch disconnection control during the vehicle speed is reduced.

In a clutch control device 40A of the present invention, automatic clutch disconnection control during the vehicle speed is reduced is performed by either one of a relaxed angle rate limit that is set when the rate of reduction in the vehicle speed or the engine speed is less than a specified engine stall avoidance determination threshold value W2 and an engine stall avoidance angle rate limit that is set when the rate of reduction in the vehicle speed or the engine speed is equal to or greater that the engine stall avoidance determination threshold value W2, and the relaxed angle rate limit is set to be lower than the engine stall avoidance angle rate limit.

According to this configuration, the relaxed angle rate limit and the engine stall avoidance angle rate limit, which are different from each other in speed, are set, and these are switched according to the rate of reduction in the vehicle speed or the engine speed, so that both the improvement of the lever feeling and the avoidance of the engine stall can be achieved.

In a clutch control device 40A of the present invention, the control unit 40 has an automatic control mode M1 that automatically operates the clutch device 26 by driving the clutch actuator 50, and a manual control intervention mode M3 that manually operates the clutch device 26 by an operation input to the clutch operation element 4b, and, when a predetermined return condition to the automatic control mode M1 is satisfied during control in the manual control intervention mode M3, the control unit 40 automatically returns to the automatic control mode M1.

According to this configuration, when a predetermined return condition to the automatic control mode is satisfied during control in the manual control intervention mode M3, the automatic control mode is automatically returned to the automatic control mode M1, whereby it is possible to suppress the driver from misidentifying the control mode and performing a shift operation (in particular, performing an in-gear operation without clutch operation in spite of the manual control intervention mode M3), to avoid engine stall due to forgetting to disconnect the clutch, and to improve operability.

In the clutch control device 40A of the present invention, when the vehicle speed or engine speed is reduced to a predetermined rate change determination threshold value W1 in the manual control intervention mode M3 and when the rate of reduction of the vehicle speed or engine speed is equal to or greater than a predetermined engine stall avoidance determination threshold value W2, the automatic clutch disconnection control is performed at the engine stall avoidance clutch disconnection speed.

According to this configuration, when the vehicle speed or the engine speed is less than the rate change determination threshold value W1 and the rate of reduction in the vehicle speed or the engine speed is equal to or greater than the engine stall avoidance determination threshold value W2, the engine stall due to the delay in the automatic clutch disconnection can be suppressed by performing the automatic clutch disconnection with the engine stall avoidance clutch disconnection speed which is relatively high speed.

In a clutch control device 40A of the present invention, the automatic clutch disconnection control during the vehicle speed is reduced is executed when the vehicle speed becomes equal to or lower than threshold values V1, V2, and a first threshold value V1 for determining the execution of the automatic clutch disconnection control in the manual control intervention mode M3 is set lower than a second threshold value V2 for determining the execution of the automatic clutch disconnection control in the automatic control mode M1.

According to this configuration, by setting the clutch disconnection execution determination threshold value V1 in the manual control intervention mode M3 lower than the clutch disconnection execution determination threshold value V2 in the automatic control mode M1, it is possible to respect the intention of the driver as much as possible during the manual control intervention mode M3 and to improve the lever feeling during the automatic control mode M1.

In the clutch control device 40A of the present invention, the automatic clutch disconnection control during the vehicle speed is reduced is started when a predetermined parameter (vehicle speed) reaches a threshold value (disconnection determination values V1, V2), and the threshold value changes according to the gear position of the transmission 21 of the motorcycle 1.

According to this configuration, the start timing of the automatic clutch disconnection control during the vehicle speed is reduced changes according to the gear position of the transmission, and thus, for example, it is possible to set the automatic clutch disconnection control to be started earlier (in a state where the vehicle speed is high) as the gear position is on the high speed side, and it is possible to increase the certainty of avoiding engine stall.

The clutch control device 40A of the present invention notifies the driver of a gear shift operation when the gear position of the transmission 21 is on the high speed side with respect to the vehicle speed.

According to this configuration, by giving the notification when the gear position of the transmission is higher with respect to the vehicle speed, it is possible to increase the possibility of downshifting and to increase the certainty that the gear position is returned to the level corresponding to the low gear position before the vehicle stops. This reduces the possibility of starting the vehicle in the high-speed gear position, and suppresses deterioration of the clutch device.

The present invention is not limited to the above embodiment, and for example, the clutch operating element is not limited to the clutch lever 4b, and may be a clutch pedal or other various operating elements. The clutch device 26 may be a normally open clutch which is in a disconnected state in a normal state in which there is no input from the outside. The clutch device 26 is not limited to the clutch device arranged between the engine 13 and the gearbox 21, and may be arranged between the prime mover and any output object other than the gearbox. The prime mover is not limited to the internal combustion engine, and may be an electric motor.

The present invention is not limited to the application to a saddle-riding type vehicle in which the clutch operation is automated as in the above embodiment. For example, the present invention can be applied to a saddle-ride type vehicle (a saddle-ride type vehicle having a gearbox device without a clutch operation) which basically performs a manual clutch operation but does not perform the manual clutch operation under a predetermined condition and can shift the speed by adjusting the driving force.

The clutch control device 40A of the present embodiment may be applied to a saddle-ride type vehicle other than a motorcycle.

The saddle-ride type vehicle includes all vehicles in which a driver rides a vehicle while stepping over the vehicle body, and includes not only motorcycles (including motorized bicycles and scooter type vehicles) but also three wheeled vehicles (including front and rear two wheeled vehicles as well as front and rear two wheeled vehicles) or four wheeled vehicles (such as four wheeled buggies).

The invention may be applied to a vehicle including an electric motor as a prime mover.

The invention may be applied to vehicles other than saddle-ride type vehicles (passenger cars, buses, trucks, etc.).

Although the clutch control device 40A of the present embodiment is applied to a vehicle, the present invention is not limited to the application to a vehicle, and may be applied to various transportation equipment such as an aircraft and a ship, and various vehicles and moving bodies such as construction machines and industrial machines. Furthermore, the present invention is widely applicable to a hand-pushed lawn mower, a cleaning machine, and the like, as long as the clutch control device is provided in an apparatus other than a vehicle.

The configuration of the above embodiment is an example of the present invention, and various changes can be made without departing from the scope of the present invention, such as replacing the components of the embodiment with well-known components.

### REFERENCE SIGNS LIST

1 Motorcycle (vehicle)
4b Clutch lever (clutch operating element)
13 Engine (internal combustion engines, prime mover)
21 Gearbox (output object)
26 Clutch device
40 Control unit
40A Clutch control device
50 Clutch actuator
L12VA, L12VB Clutch disconnection speed (rate of change of the actual measurement value of the clutch angle)
M1 Auto Control Mode, Automatic mode
M2 Manual Control Mode, Manual Mode
M3 Manual Control Intervention Mode, Manual Intervention Mode
V1, V2 Threshold value
W1 Rate change determination threshold value
W2 Engine stall avoidance judgment threshold value

## Claims

1. A clutch control device (40A), comprising;
a clutch device (26) that is configured to disconnect and connect power transmission between a prime mover (13) and an output object (21) of a vehicle (1);
a clutch actuator (50) that is configured to operate the clutch device (26); and
a control unit (40) that is configured to control a drive of the clutch actuator (50);
wherein the control unit (40) performs automatic clutch disconnection control which disconnects the clutch device (26) during a gear shift is performed and a vehicle speed is reduced, and sets a clutch disconnection speed (L12VB) of the automatic clutch disconnection control during the vehicle speed is reduced to a speed lower than a clutch disconnection speed (L12VA) of the automatic clutch disconnection control during the gear shift is performed.

2. The clutch control device according to claim 1, wherein the automatic clutch disconnection control during the vehicle speed is reduced is performed by either one of:
a relaxed clutch disconnection speed that is set when a rate of reduction in vehicle speed or engine speed is less than a specified threshold value; and
an engine stall avoidance clutch disconnection speed that is set when the rate of reduction in the vehicle speed or the engine speed is equal to or greater than the threshold value; and
the relaxed clutch disconnection speed is set to be lower than the engine stall avoidance clutch disconnection speed.

3. The clutch control device according to claim 2, wherein the control unit (40) has:
an automatic control mode (M1) that automatically operates the clutch device (26) by driving the clutch actuator (50); and
a manual control intervention mode (M3) that manually operates the clutch device (26) by an operation input to a clutch operator (4b) operated by a driver, and
wherein, when a predetermined return condition to the automatic control mode (M1) is satisfied during control in the manual control intervention mode (M3), the control unit (40) automatically returns to the automatic control mode (M1).

4. The clutch control device according to claim 3, wherein, when the vehicle speed or the engine speed is reduced to a predetermined rate change determination threshold value (W1) in the manual control intervention mode (M3) and when the rate of reduction of the vehicle speed or the engine speed is equal to or greater than a predetermined engine stall avoidance determination threshold value (W2), the automatic clutch disconnection control is performed at the engine stall avoidance clutch disconnection speed.

5. The clutch control device according to claim 4, wherein the automatic clutch disconnection control during the vehicle speed is reduced is executed when the vehicle speed becomes equal to or lower than the threshold value (V1, V2), and
a first threshold value (V1) for determining execution of the automatic clutch disconnection control in the manual control intervention mode (M3) is set lower than a second threshold value (V2) for determining execution of the automatic clutch disconnection control in the automatic control mode (M1).

6. The clutch control device according to claim 1 or 2, wherein the automatic clutch disconnection control during the vehicle speed is reduced is started when a predetermined parameter reaches a threshold value (V1, V2); and
the threshold value (V1, V2) changes according to a gear position of a transmission (21) of the vehicle (1).

7. The clutch control device according to claim 6, wherein when the gear position of the transmission (21) is on a high speed side with respect to the vehicle speed, a notification is given to the driver to urge the driver to perform a gear shift operation.
